# EUROPÄISCHE PATENTANMELDUNG

(11) **EP 0 955 146 A2**
(43) Veröffentlichungstag der Anmeldung: **10.11.1999**
(21) Anmeldenummer: 99105574.0
(22) Anmeldetag: 18.03.1999
(51) Int. Cl.: B29C 45/54

(54) **Verfahren und Vorrichtung zum Einspritzen von Kunststoffmaterial**

(30) Priorität: 04.05.1998 DE 19819833
(71) Anmelder: Battenfeld GmbH, D-58540 Meinerzhagen (DE)
(72) Erfinder: Ganz, Martin, 2801 Katzelsdorf (AT); Bleier, Harald Ing., 2700 Wiener Neustadt (AT)

(57) **Zusammenfassung**

Die Erfindung betrifft ein Verfahren und eine Vorrichtung zum Einspritzen von Kunststoffmaterial oder anderem spritzgießfähigen Material in ein Spritzgießwerkzeug (1). Das Verfahren weist die Schritte auf: a) Plastifizieren von Kunststoffmaterial oder von anderem spritzgießfähigen Material in einer Plastifiziervorrichtung (2); b) Fördern des plastifizierten Kunststoffs oder des plastifizierten anderen spritzgießfähigen Materials in eine Dosiervorrichtung (3), die mit der Plastifiziervorrichtung (2) in fluidischer Verbindung (4) steht, und zwar im wesentlichen in genau der Menge, die in das Spritzgießwerkzeug (1) eingebracht werden soll; c) Fördern des plastifizierten Kunststoffs oder des plastifizierten anderen spritzgießfähigen Materials im wesentlichen in der Menge, die in das Spritzgießwerkzeug (1) eingebracht werden soll, von der Dosiervorrichtung (3) in eine Einspritzvorrichtung (5) über eine fluidische Verbindung (6) bei gleichzeitiger Verhinderung des Rückströmens von Kunststoff oder von anderem spritzgießfähigen Material von der Dosiervorrichtung (3) in die Plastifiziervorrichtung (2); d) Einspritzen der gesamten Kunststoffmenge oder der Menge des anderen spritzgießfähigen Materials, die sich in der Einspritzvorrichtung (5) befindet, in das Spritzgießwerkzeug (1) bei gleichzeitiger Verhinderung des Rückströmens von Kunststoff oder des anderen spritzgießfähigen Materials von der Einspritzvorrichtung (5) in die Dosiervorrichtung (3). Damit wird die Herstellung von kleinen und kleinsten Spritzgießformteilen erleichtert und die Einspritzung einer reproduzierbar genauen Menge Schmelze bewerkstelligt.

## Beschreibung

Die Erfindung bezieht sich auf ein Verfahren zum Einspritzen von Kunststoffmaterial oder anderem spritzgießfähigen Material in ein Spritzgießwerkzeug, das die Schritte aufweist:
a) Plastifizieren von Kunststoffmaterial oder anderem spritzgießfähigen Material in einer Plastifiziervorrichtung;
b) Fördern des plastifizierten Kunststoffs oder des anderen spritzgießfähigen Materials in eine Dosiervorrichtung, die mit der Plastifiziervorrichtung in fluidischer Verbindung steht, und zwar im wesentlichen in genau der Menge, die in das Spritzgießwerkzeug eingebracht werden soll;
c) Fördern des plastifizierten Kunststoffs oder des anderen spritzgießfähigen Materials im wesentlichen in der Menge, die in das Spritzgießwerkzeug eingebracht werden soll, von der Dosiervorrichtung in eine Einspritzvorrichtung über eine fluidische Verbindung bei gleichzeitiger Verhinderung des Rückströmens von Kunststoff von der Dosiervorrichtung in die Plastifiziervorrichtung;
d) Einspritzen der gesamten Kunststoffmenge oder der Menge des anderen spritzgießfähigen Materials, die sich in der Einspritzvorrichtung befindet, in das Spritzgießwerkzeug bei gleichzeitiger Verhinderung des Rückströmens von Kunststoff von der Einspritzvorrichtung in die Dosiervorrichtung.

Des weiteren betrifft die Erfindung eine Vorrichtung zum Einspritzen von Kunststoffmaterial oder anderem spritzgießfähigen Material in ein Spritzgießwerkzeug.

Beim Spritzgießen von Kunststoffen kommen üblicherweise Plastifizier- und Einspritzvorrichtungen zum Einsatz, bei denen eine Plastifizier- und Einspritzschnecke Kunststoffmaterial plastifiziert; die Schmelze wird dann durch eine Axialverschiebung der Schnecke in das Spritzgießwerkzeug injiziert. Um ein Rückströmen der Schmelze während des Einspritzens zu verhindern, ist am Ende der Schnecke üblicherweise eine Rückstromsperre angeordnet.

In jüngerer Zeit ist der Bedarf aufgetreten, Spritzgießformteile mit besonders kleinen Ausmaßen herzustellen. Hier sind mikro-mechanische Bauteile (z. B. Mikrozahnräder für Uhren), medizintechnische Kleinteile und optoelektronische Elemente (z. B. Teile für Lichtleiter) als Beispielbauteile zu nennen, bei denen die Herstellung mit klassischen Spritzgießmaschinen Probleme bereitet.

Eines dieser Probleme entsteht dadurch, wenn bei der Herstellung kleiner und kleinster Kunststoffteile geringe Mengen heißen, thermoplastischen Kunststoffmaterials in das kalte Werkzeug eingebracht werden müssen. Dabei ergibt sich nämlich zwangsläufig ein kritischer thermischer Übergangsbereich im Endbereich der Schnecke bzw. im Düsenbereich.

Der Erfindung liegt daher die **Aufgabe** zugrunde, diesen thermischen Übergangsbereich zu vermeiden und insbesondere beim Spritzgießen kleiner Spritzgießteile eine genaue Dosierung der einzuspritzenden Kunststoffmenge oder der Menge an anderem spritzgießfähigen Material zu realisieren. Weiterhin soll ein Verfahren und eine Vorrichtung geschaffen werden, mit dem bzw. der kleinste Mengen Schmelze für die Herstellung von Klein- und Kleinstformteilen in exakter Dosierung ins Werkzeug eingespritzt werden können. Dabei soll der Druckaufbau möglichst kavitätsnah erfolgen.

Die **Lösung** dieser Aufgabe durch die Erfindung ist durch ein Verfahren zum Einspritzen von Kunststoffmaterial oder anderem spritzgießfähigen Material mit folgenden Schritten gekennzeichnet:
a) Plastifizieren von Kunststoffmaterial oder anderem spritzgießfähigen Material in einer Plastifiziervorrichtung;
b) Fördern des plastifizierten Kunststoffs oder des anderen spritzgießfähigen Materials in eine Dosiervorrichtung, die mit der Plastifiziervorrichtung in fluidischer Verbindung steht, und zwar im wesentlichen in genau der Menge, die in das Spritzgießwerkzeug eingebracht werden soll;
c) Fördern des plastifizierten Kunststoffs oder des anderen spritzgießfähigen Materials im wesentlichen in der Menge, die in das Spritzgießwerkzeug eingebracht werden soll, von der Dosiervorrichtung in eine Einspritzvorrichtung über eine fluidische Verbindung bei gleichzeitiger Verhinderung des Rückströmens von Kunststoff von der Dosiervorrichtung in die Plastifiziervorrichtung;
d) Einspritzen der gesamten Kunststoffmenge oder der Menge des anderen spritzgießfähigen Materials, die sich in der Einspritzvorrichtung befindet, in das Spritzgießwerkzeug bei gleichzeitiger Verhinderung des Rückströmens von Kunststoff von der Einspritzvorrichtung in die Dosiervorrichtung.

Vorzugsweise ist dabei vorgesehen, daß die sich in der Einspritzvorrichtung befindliche Kunststoffschmelze oder die Schmelze des anderen spritzgießfähigen Materials derart temperiert wird, daß sie schmelzflüssig bleibt.

Die Vorrichtung zum Einspritzen von Kunststoffmaterial oder anderem spritzgießfähigen Material in ein Spritzgießwerkzeug, ist durch folgende Merkmale gekennzeichnet:
- eine Plastifiziervorrichtung, in der Kunststoffmaterial oder anderes spritzgießfähiges Material plastifiziert wird;
- eine fluidische Verbindung zwischen der Plastifiziervorrichtung und einer Dosiervorrichtung zur Aufnahme einer vorgegebenen Menge Kunststoffschmelze oder Schmelze eines anderen spritzgießfähigen Materials, wobei in der Verbindung ein Element zur Verhinderung des Rückströmens von Kunststoff, insbesondere ein Rückschlagventil, angeordnet ist;
- eine fluidische Verbindung zwischen der Dosiervorrichtung und einer Einspritzvorrichtung, in die das in das Spritzgießwerkzeug einzuspritzende Kunststoffmaterial oder anderes spritzgießfähiges Material vor dem Einspritzen gefördert wird, wobei die Menge der in die Einspritzvorrichtung geförderten Kunststoffschmelze oder Schmelze eines anderen spritzgießfähigen Materials im wesentlichen der in das Spritzgießwerkzeug einzubringenden Menge entspricht;
- Mittel zur Verhinderung des Rückströmens von Kunststoffschmelze oder Schmelze eines anderen spritzgießfähigen Materials von der Einspritzvorrichtung in die Dosiervorrichtung.

Vorteilhafterweise sind die Mittel zur Verhinderung des Rückströmens von Kunststoffschmelze oder von Schmelze eines anderen spritzgießfähigen Materials von der Einspritzvorrichtung in die Dosiervorrichtung durch einen Einspritzkolben gebildet, der für einen Verschluß der fluidischen Verbindung zwischen der Dosiervorrichtung und der Einspritzvorrichtung beim Einspritzen sorgt.

Vorzugsweise ist die Einspritzvorrichtung zumindest teilweise von Temperierungsmitteln umgeben, die ein Erstarren der Schmelze verhindern.

Durch die erfindungsgemäße Vorgehensweise bzw. Ausgestaltung wird vorteilhafterweise erreicht, daß der Druckaufbau in der Schmelze beim Einspritzen sich sehr nahe an der Kavität selber ergibt. Daraus folgt eine höhere Qualität beim Einspritzergebnis, da mittels des Verfahrens bzw. mit der Vorrichtung ein exaktes Dosieren und eine exakte Bemessung der einzuspritzenden Kunststoffmenge möglich ist, während gleichzeitig die thermischen Übergangsprobleme reduziert werden.

In der Zeichnung ist ein Ausführungsbeispiel der Erfindung dargestellt.
- Fig. 1: zeigt schematisch den Aufbau einer Plastifizier- und Einspritzvorrichtung für Kunststoff in einem ersten Verfahrensstatus, in
- Fig. 2: ist derselbe Aufbau zu einem späteren Zeitpunkt zu sehen,
- Fig. 3: zeigt die Anordnung zu einem noch späteren Zeitpunkt, in
- Fig. 4: ist der Aufbau zu einem noch späteren Zeitpunkt zu sehen.
- Fig. 5: zeigt eine alternative Ausgestaltung der Plastifizier- und Einspritzvorrichtung.

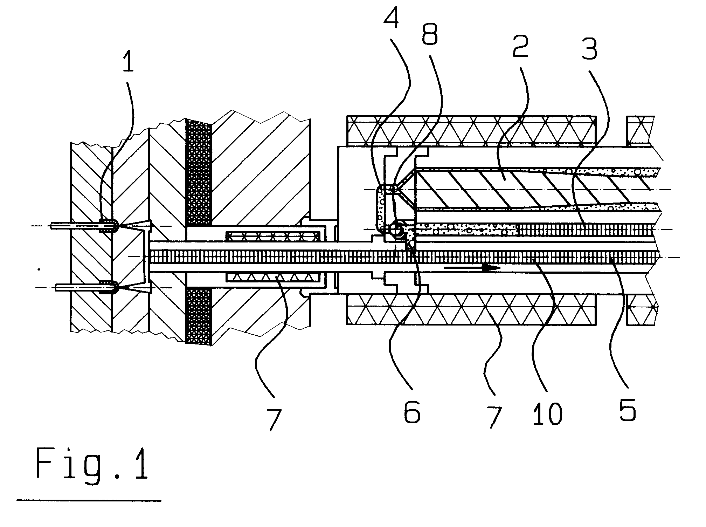

In Fig. 1 ist eine Spritzgießvorrichtung in einem ersten Verfahrensstadium dargestellt. Ein Spritzgießwerkzeug 1 weist eine - nicht näher bezeichnete - Kavität auf, in die aufgeschmolzenes Kunststoffmaterial injiziert werden soll, um ein Formteil herzustellen.

Kunststoffgranulat oder -pulver wird hierfür in bekannter Weise in einer Schnecken-Plastifiziereinheit 2 aufgeschmolzen. Die Kunststoffschmelze gelangt über eine Leitung (fluidische Verbindung) 4 in eine Dosiervorrichtung 3. Die Dosiervorrichtung 3 besteht im wesentlichen aus einer Kolben-Zylinder-Einheit, in die möglichst genau diejenige Menge Kunststoffschmelze eingebracht wird, die für die Herstellung eines Formteils benötigt wird. Hierbei kann beispielsweise vorgesehen werden, daß die Bewegung des Kolbens der Dosiervorrichtung 3 beobachtet wird und der Plastifiziervorgang in der Plastifiziereinheit 2 unterbrochen wird, sobald eine gewünschte Kolbenposition (unter Berücksichtigung von Temperatur und Druck) erreicht ist; es ist dann genau die erforderliche Schmelzemenge in der Dosiereinheit 3. In jedem Falle ist es von Bedeutung, daß vor der Veranlassung weiterer Schritte (s. unten) eine genau definierte Schmelzemenge von der Dosiervorrichtung aufgenommen worden ist.

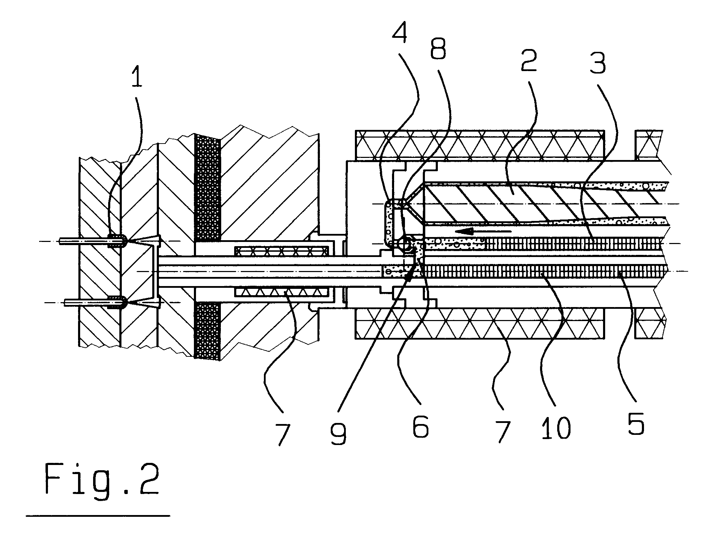

Wie weiter in Fig. 1 zu sehen ist, ist während des Dosiervorganges, d. h. während Schmelze in die Dosiervorrichtung 3 eingebracht wird, der Einspritzkolben 10 einer Einspritzvorrichtung in einer derart vorgeschobenen Stellung, daß keine Schmelze über die Leitung (fluidische Verbindung) 6 von der Dosiervorrichtung 3 in die Einspritzvorrichtung 5 fließen kann. In Fig. 2 ist das sich anschließende Verfahrensstadium zu sehen. Jetzt ist der Einspritzkolben 10, mit dem die Schmelze in das Werkzeug 1 injiziert wird, zurückgezogen worden (s. auch Pfeil in Fig. 1), so daß die fluidische Verbindung 6 zwischen der Dosiervorrichtung 3 und der Einspritzvorrichtung 5 freigegeben ist: Schmelze kann von der Dosiervorrichtung 3 in die Einspritzvorrichtung 5 fließen. Ein Ruckfließen von Schmelze von der Dosiervorrichtung 3 in die Plastifiziervorrichtung 2 ist dadurch verhindert, daß ein Rückschlagventil 8 in der fluidischen Verbindung 4 zwischen Plastifiziervorrichtung 2 und Dosiervorrichtung 3 angeordnet ist.

Da in der Dosiervorrichtung 3 genau die Menge an Schmelze gespeichert worden ist, die für die Herstellung eines Formteils benötigt wird, wird durch die Betätigung des Kolbens der Dosiervorrichtung 3 (s. Pfeil in Fig. 2) exakt diese Menge über die Leitung 6 in den Zylinder der Einspritzvorrichtung 5 ausgebracht.

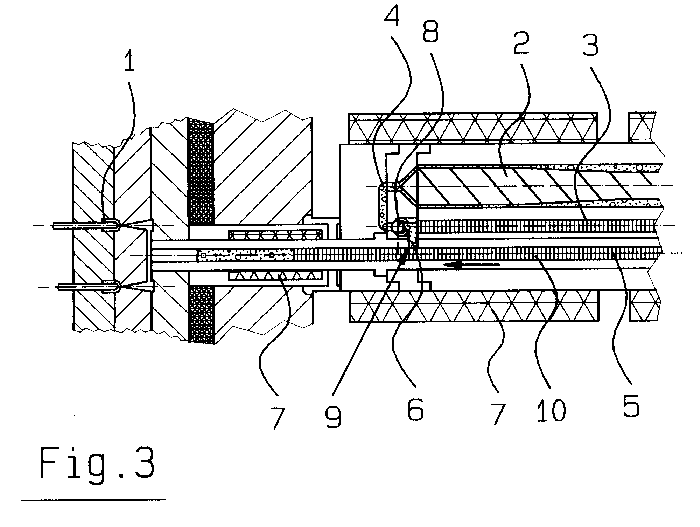

In Fig. 3 ist ein späteres Verfahrensstadium zu sehen. Die in der Dosiervorrichtung 3 gespeicherte Schmelzemenge wurde vollständig in die Einspritzvorrichtung 5 ausgetrieben, weshalb der Kolben der Dosiervorrichtung 3 nunmehr in der vordersten Stellung ist. Die in der Einspritzvorrichtung 5 befindliche Schmelze, die im wesentlichen genau der Menge entspricht, die für die Herstellung eines Formteils benötigt wird, wird mit dem Einspritzkolben 10 der Einspritzvorrichtung 5 ins Werkzeug 1 injiziert (s. Pfeil in Fig. 3).

Durch die geometrische Anordnung der Einspritzvorrichtung 5 und insbesondere deren Kolben 10 wird erreicht, daß beim Austreiben von Schmelze aus der Einspritzvorrichtung 5 in die Werkzeugkavität ein Rückströmen von Schmelze in die Dosiervorrichtung verhindert wird. Der Kolben sperrt nämlich nach dem Passieren der Verbindung 6 diese ab und bildet dann Mittel 9 zum Verhindern des Rückströmens von Schmelze.

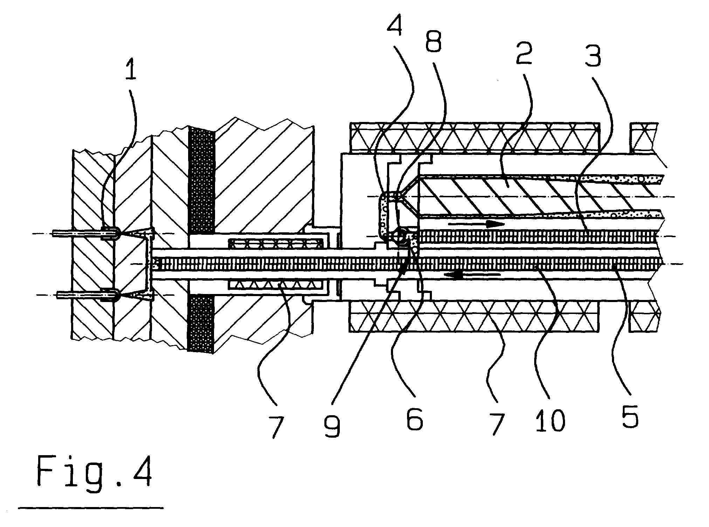

Wie in Fig. 4 zu sehen ist, wird der Kolben 10 der Einspritzvorrichtung 5 so weit nach vorne geschoben, daß er alles Kunststoffmaterial, das sich in der Einspritzvorrichtung 5 befindet, austreibt. Wie weiterhin in dieser Figur zu sehen ist, wird bereits mit der Vorbereitung des nächsten Schusses begonnen: Die Plastifiziervorrichtung 2 produziert bereits wieder Kunststoffschmelze, die in die Dosiervorrichtung 3 ausgetrieben wird (s. Pfeil über der Dosiervorrichtung 3).

Wie weiter in allen Figuren zu sehen ist, sind Heizelemente (Temperierungsmittel) 7 vorgesehen, die zumindest Teile der Vorrichtung umgeben und sicherstellen, daß es zu keinem "Einfrieren" von Schmelze in der Vorrichtung bzw. ihren Teilen kommt.

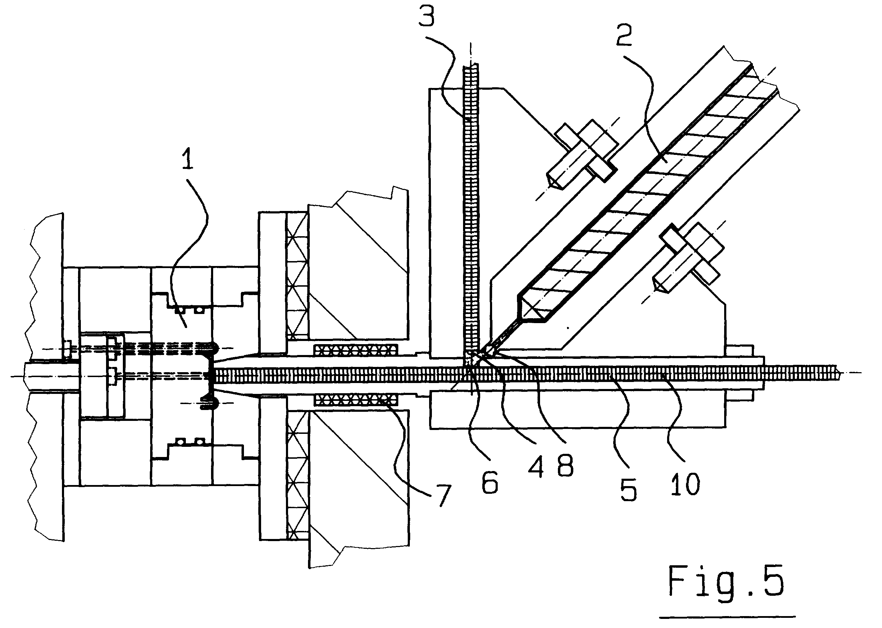

In Fig. 5 ist eine anders aufgebaute Vorrichtung zu sehen. Vom Prinzip her arbeitet diese Vorrichtung genau wie die, die in den Figuren 1 bis 4 dargestellt worden ist. Wie allerdings leicht zu sehen ist, sind hier die Plastifiziervorrichtung 2, die Dosiervorrichtung 3 und die Einspritzvorrichtung 5 zueinander im Winkel angeordnet und zwar in der Weise, daß die drei Einheiten 2, 3 und 5 quasi zu einem gemeinsamen Schnittpunkt hin arbeiten, der am Treffpunkt der Längsachsen der drei Einheiten liegt.

Für das Ausstoßen fertig gespritzter Formteile aus dem Werkzeug oder des Angusses kann vorgesehen werden, daß der Einspritzkolben 10 eine kurze Stoßbewegung ausführt und damit die Funktion eines Auswerfers übernimmt.

Das erfindungsgemäße Verfahren und die vorgeschlagene Vorrichtung eignen sich auch gut für die Verarbeitung anderer spritzgießfähiger Materialien, wie z. B. Metall; die Erfindung ist also nicht auf die Verarbeitung von Kunststoff beschränkt.

### Bezugszeichenliste:

- 1: Spritzgießwerkzeug
- 2: Plastifiziervorrichtung
- 3: Dosiervorrichtung
- 4: fluidische Verbindung
- 5: Einspritzvorrichtung
- 6: fluidische Verbindung
- 7: Temperierungsmittel
- 8: Rückschlagventil
- 9: Mittel zum Verhindern des Rückströmens von Schmelze
- 10: Einspritzkolben

## Patentansprüche

1. Verfahren zum Einspritzen von Kunststoffmaterial oder anderem spritzgießfähigen Material in ein Spritzgießwerkzeug (1), das die Schritte aufweist:
a) Plastifizieren von Kunststoffmaterial oder anderem spritzgießfähigen Material in einer Plastifiziervorrichtung (2);
b) Fördern des plastifizierten Kunststoffs oder des plastifizierten anderen spritzgießfähigen Materials in eine Dosiervorrichtung (3), die mit der Plastifiziervorrichtung (2) in fluidischer Verbindung (4) steht, und zwar im wesentlichen in genau der Menge, die in das Spritzgießwerkzeug (1) eingebracht werden soll;
c) Fördern des plastifizierten Kunststoffs oder des plastifizierten anderen spritzgießfähigen Materials im wesentlichen in der Menge, die in das Spritzgießwerkzeug (1) eingebracht werden soll, von der Dosiervorrichtung (3) in eine Einspritzvorrichtung (5) über eine fluidische Verbindung (6) bei gleichzeitiger Verhinderung des Rückströmens von Kunststoff oder von anderem spritzgießfähigen Material von der Dosiervorrichtung (3) in die Plastifiziervorrichtung (2);
d) Einspritzen der gesamten Kunststoffmenge oder der gesamten Menge des anderen spritzgießfähigen Materials, die sich in der Einspritzvorrichtung (5) befindet, in das Spritzgießwerkzeug (1) bei gleichzeitiger Verhinderung des Rückströmens von Kunststoff oder von anderem spritzgießfähigen Material von der Einspritzvorrichtung (5) in die Dosiervorrichtung (3).

2. Verfahren nach Anspruch 1, dadurch gekennzeichnet, daß die sich in der Einspritzvorrichtung (5) befindliche Kunststoffschmelze oder Schmelze eines anderen spritzgießfähigen Materials derart temperiert (7) wird, daß sie schmelzflüssig bleibt.

3. Vorrichtung zum Einspritzen von Kunststoffmaterial oder anderem spritzgießfähigen Material in ein Spritzgießwerkzeug (1), das folgende Elemente aufweist:
- eine Plastifiziervorrichtung (2), in der Kunststoffmaterial oder anderes spritzgießfähiges Material plastifiziert wird;
- eine fluidische Verbindung (4) zwischen der Plastifiziervorrichtung (2) und einer Dosiervorrichtung (3) zur Aufnahme einer vorgegebenen Menge Kunststoffschmelze oder Schmelze eines anderen spritzgießfähigen Materials, wobei in der Verbindung (4) ein Element (8) zur Verhinderung des Rückströmens von Kunststoff oder anderem spritzgießfähigen Material, insbesondere ein Rückschlagventil, angeordnet ist;
- eine fluidische Verbindung (6) zwischen der Dosiervorrichtung (3) und einer Einspritzvorrichtung (5), in die das in das Spritzgießwerkzeug (1) einzuspritzende Kunststoffmaterial oder andere spritzgießfähige Material vor dem Einspritzen gefördert wird, wobei die Menge der in die Einspritzvorrichtung (5) geförderten Kunststoffschmelze oder die Menge der Schmelze des anderen spritzgießfähigen Materials im wesentlichen der in das Spritzgießwerkzeug (1) einzubringenden Menge entspricht;
- Mittel (9) zur Verhinderung des Rückströmens von Kunststoffschmelze oder von Schmelze eines anderen spritzgießfähigen Materials von der Einspritzvorrichtung (5) in die Dosiervorrichtung (3).

4. Vorrichtung nach Anspruch 3, dadurch gekennzeichnet, daß die Mittel (9) zur Verhinderung des Rückströmens von Kunststoffschmelze oder von Schmelze eines anderen spritzgießfähigen Materials von der Einspritzvorrichtung (5) in die Dosiervorrichtung (3) durch einen Einspritzkolben (10) gebildet werden, der für einen Verschluß der fluidischen Verbindung (6) zwischen der Dosiervorrichtung (3) und der Einspritzvorrichtung (5) beim Einspritzen sorgt.

5. Vorrichtung nach Anspruch 3 oder 4, dadurch gekennzeichnet, daß die Einspritzvorrichtung (5) zumindest teilweise von Temperierungsmitteln (7) umgeben ist, die ein Erstarren der Schmelze verhindern.
